# EUROPEAN PATENT APPLICATION

(11) **EP 3 689 514 A1**
(43) Date of publication of application: **05.08.2020**
(21) Application number: 20153598.6
(22) Date of filing: 24.01.2020
(51) Int. Cl.: B23B 27/16, B23C 5/22

(54) **DISPOSABLE CUTTING INSERT LOCKING STRUCTURE**

(30) Priority: 30.01.2019 TW 108103561
(71) Applicant: Chang, Hsin-Tien, Taichung City (TW)
(72) Inventor: Chang, Hsin-Tien, Taichung City (TW)
(74) Representative: Viering, Jentschura & Partner mbB Patent- und Rechtsanwälte

(57) **Abstract**

A disposable cutting insert locking structure includes a shank (10) and a disposable cutting insert (20). An insert seat (11) is disposed at a front end of the shank (10). The insert seat (11) has a positioning portion (12). The positioning portion (12) has a triangular shape. The positioning portion (12) is provided with a screw hole (13). The disposable cutting insert (20) has a bottom (23). The bottom (23) is formed with a positioning recess (24). A through hole (25) is defined in the positioning recess (24) for a screw (26) to be inserted from a top (22) of the disposable cutting insert (20) and screwed to the insert seat (11).

## Description

### FIELD OF THE INVENTION

The present invention relates to a holding and positioning structure for a disposable cutting insert to be locked on an insert seat of a cutting tool, and more particularly to a disposable cutting insert locking structure.

### BACKGROUND OF THE INVENTION

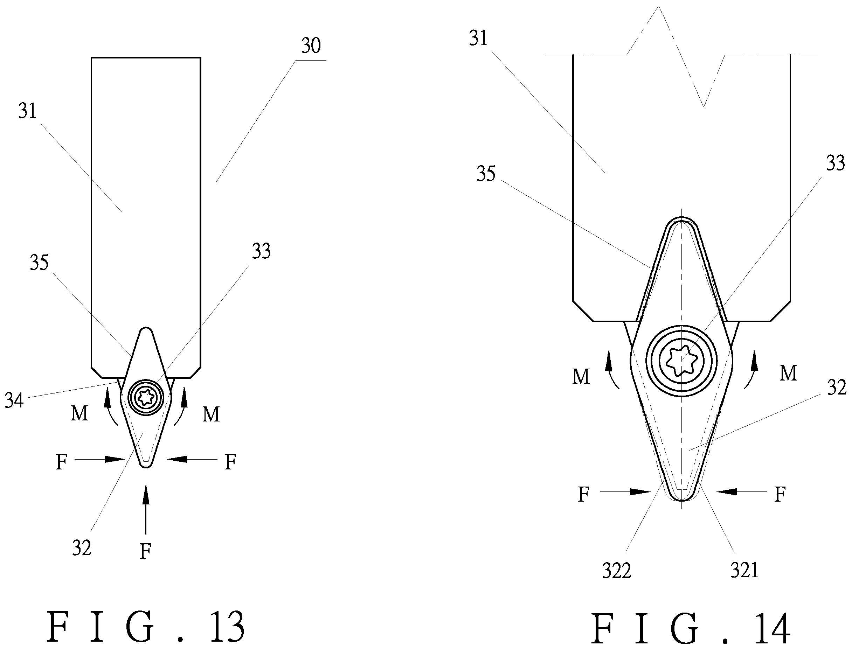

A conventional turning tool 30, as shown in FIG. 13, comprises a shank 31 and a disposable turning insert 32 that is locked on an insert seat 34 by a screw 33. The disposable turning insert 32 is supported and held by a V-shaped side 35 of the insert seat 34 located behind the screw 33, so that the disposable turning insert 32 can withstand multiple cutting forces F in different directions when cutting.

Referring to FIG. 14, although the disposable turning insert 32 is locked by the screw 33 and supported by the V-shaped side 35 of the shank 31, there is a slight gap between the disposable turning insert 32 and the V-shaped side 35. When the disposable turning insert 32 performs cutting, the cutting forces F generate multiple moments M(F×R) (as shown in FIG. 13 and FIG. 14) from the position of the tip of the disposable turning insert 32 to the position of the screw 33 of the disposable turning insert 32. This will cause a deflection of the disposable turning insert 32, and the position of the tip of the disposable turning insert 32 is shifted by an angle, which affects the cutting size and the roughness of the surface of a workpiece and the service life of the tip of the disposable turning insert 32. When cutting a workpiece having a wavy surface, as shown in FIG. 14, the cutting edges 321, 322 on both sides of the tip of the disposable turning insert 32 will be used to cut the workpiece alternately. That is, alternate cutting forces F are generated, and alternate moments M(F×R) are generated on the position of the screw 33 of the disposable turning insert 32, so that the disposable turning insert 32 has an alternate deflection phenomenon, which affects the accuracy of the cutting dimensions, increases the roughness of the surface of the workpiece, and affects the service life of the cutting edge.

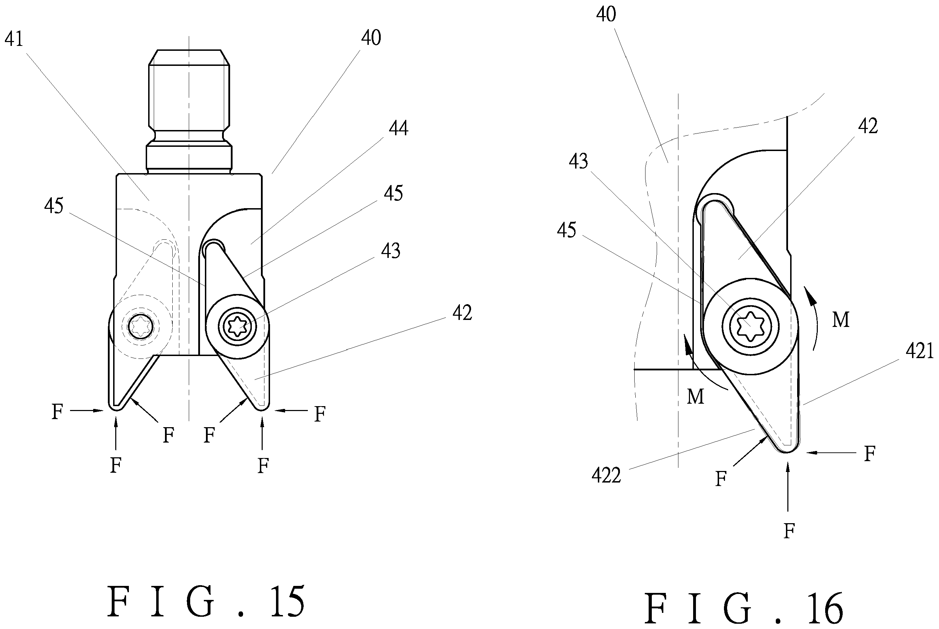

Referring to FIG. 15, a conventional milling tool 40 includes a shank 41 and a disposable milling insert 42 that is locked on an insert seat 44 by a screw 43. The disposable milling insert 42 is supported and held by a V-shaped side 45 of the insert seat 44 located behind the screw 43, so that the disposable milling insert 32 can withstand multiple cutting forces F in different directions, such as left, right and bottom, when cutting.

Referring to FIG. 16, as in the conventional turning tool, there is a slight gap between the disposable milling insert 42 and the V-shaped side 45. When the disposable milling insert 42 performs cutting, the cutting force F of the first cutting edge 421 generates a moment M(F×R) from the position of the tip of the disposable milling insert 42 to the position of the screw 43 of the disposable milling insert 42. This will cause a deflection of the disposable milling insert 42. When the second cutting edge 422 of the disposable milling insert 42 performs cutting in turn, the cutting force F of the second cutting edge 422 generates a reverse moment M(F×R), so that the disposable milling insert 42 is deflected in another direction. Therefore, under the effect of the continuous deflection of the milling tool 40 in left and right directions, it will inevitably cause the milling tool to vibrate. The surface roughness value will increase, and the dimensional accuracy will decrease.

No matter a disposable turning tool or a disposable milling tool, there is a slight gap between the disposable turning/milling insert and the V-shaped side. When the disposable turning/milling insert performs cutting, the cutting force F of the first cutting edge generates a moment from the position of the tip to the position of the screw of the disposable turning/milling insert, so that the disposable turning/milling insert has a phenomenon of unidirectional deflection or alternate left and right deflection. As a result, the cutting tool will cause vibrations, the surface roughness value will increase, and the dimensional accuracy will decrease.

Accordingly, the inventor of the present invention has devoted himself based on his many years of practical experiences to solve these problems.

### SUMMARY OF THE INVENTION

The primary object of the present invention is to provide a disposable cutting insert locking structure. The disposable cutting insert locking structure comprises a shank and a disposable cutting insert. An insert seat is disposed at a front end of the shank. The insert seat is a concave configuration and has a first side. The insert seat has a triangular positioning portion. The positioning portion has a first side surface, a second side surface, and a third side surface. The first side surface and the second side surface are disposed at a front end of the positioning portion and arranged in a V shape. The third side surface is disposed at a rear end of the positioning portion. The first side surface, the second side surface and the third side surface surround a solid body of the positioning portion. The positioning portion is provided with a screw hole. The disposable cutting insert has a first cutting side, a second cutting side, a second side, a top, and a bottom. Intersecting edges between the top and the first cutting side and between the top and the second cutting side serve as two cutting edges. The bottom of the disposable cutting insert is placed on the insert seat of the shank. The bottom is formed with a positioning recess corresponding in shape to the positioning portion of the insert seat. The positioning recess has a first inner side, a second inner side, and a third inner side. A through hole is defined in the positioning recess for a screw to be inserted from the top of the disposable cutting insert and screwed to the insert seat.

Preferably, a slight offset of 0.1-0.2mm is defined between a center point of the through hole of the disposable cutting insert and a center point of the screw hole of the positioning portion. The center point of the screw hole is slightly higher than the center point of the through hole so that a height difference is defined between the center point of the screw hole and the center point of the through hole. The height difference is the offset. Thus, when the disposable cutting insert is locked to the insert seat, the disposable cutting insert will be slightly shifted upward by the push of the screw, so that the first inner side and the second inner side of the disposable cutting insert are in contact with and tightly engaged with the first side surface and the second side surface of the positioning portion. A gap is defined between the second side of the disposable cutting insert and the first side of the insert seat.

### BRIEF DESCRIPTION OF THE DRAWINGS

FIG. 1 is a perspective view of the present invention;
FIG. 2 is a bottom perspective view of the disposable cutting insert of the present invention;
FIG. 3 is a top view of the present invention;
FIG. 4 is an enlarged partial sectional view showing the disposable cutting insert mounted to the insert seat of the present invention;
FIG. 5 is a schematic view showing the concurrent forces of the present invention when cutting;
FIG. 6 illustrates an embodiment of the present invention applied to a milling tool;
FIG. 7 illustrates an embodiment of the present invention applied to a dovetail-groove cutting tool;
FIG 8 illustrates an embodiment of the present invention applied to a T-groove cutting tool;
FIG. 9 illustrates an embodiment of the present invention applied to a round-groove turning tool;
FIG. 10 illustrates an embodiment of the present invention applied to a grooving turning tool;
FIG. 11 illustrates an embodiment of the present invention applied to a square disposable cutting insert;
FIG. 12 illustrates an embodiment of the present invention applied to a circular disposable cutting insert;
FIG. 13 is a planar view of a conventional turning tool;
FIG. 14 is a schematic view showing the deflection of the disposable cutting insert when the conventional turning tool performs cutting;
FIG. 15 is a planar view of a conventional milling tool; and
FIG. 16 is a schematic view showing the deflection of the disposable milling insert when the conventional milling tool performs cutting.

### DETAILED DESCRIPTION OF THE PREFERRED EMBODIMENTS

Embodiments of the present invention will now be described, by way of example only, with reference to the accompanying drawings.

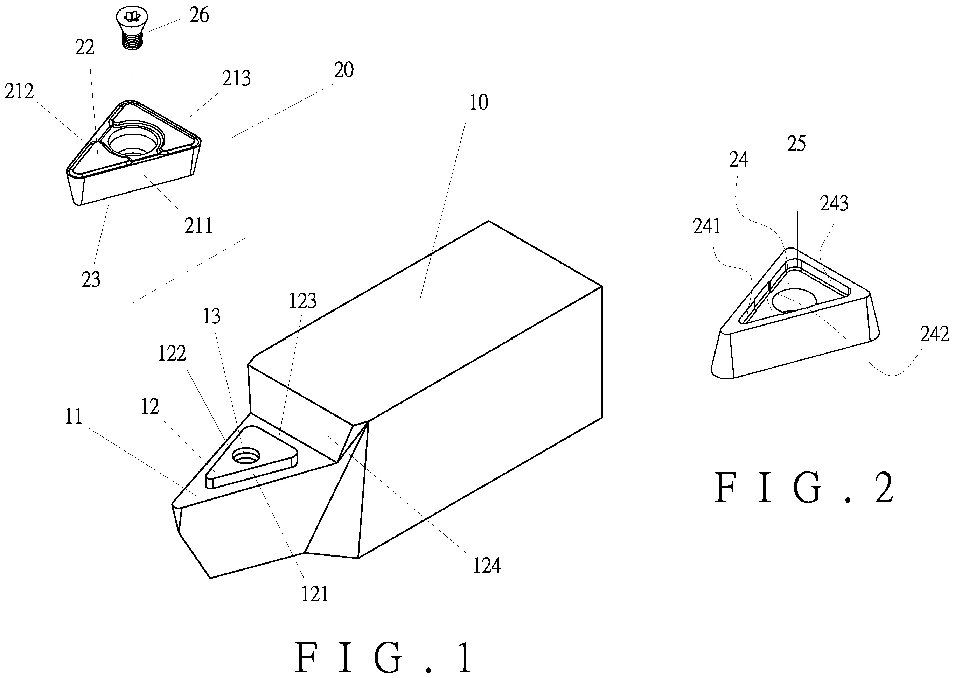

Referring to FIGS. 1-3, a disposable cutting insert locking structure according to the present invention comprises a shank 10 and a disposable cutting insert 20. The disposable cutting insert 20 is locked on an insert seat 11 of the shank 10 by a screw 26.

Referring to FIGS. 1-3, the insert seat 11 is disposed at the front end of the shank 10. The shape of the insert seat 11 varies with the function of a cutting tool, and may have a square or round shape. According to the preferred embodiment, the insert seat 11 has a triangular shape. The insert seat 11 is a concave configuration and has a first side 124. The insert seat 11 has a triangular positioning portion 12. The positioning portion 12 has a first side surface 121, a second side surface 122, and a third side surface 123. The first side surface 121 and the second side surface 122 are disposed at the front end of the positioning portion 12. The first side surface 121 and the second side surface 122 are arranged in a V shape. The third side surface 123 is disposed at the rear end of the positioning portion 12. The first side surface 121, the second side surface 122, and the third side surface 123 surround the solid body of the positioning portion 12. The positioning portion 12 is provided with a screw hole 13.

The disposable cutting insert 20 has a triangular shape. The disposable cutting insert 20 has a first cutting side 211, a second cutting side 212, a second side 213, a top 22, and a bottom 23. The intersecting edges between the top 22 and the first cutting side 211 and between the top 22 and the second cutting side 212 serve as two cutting edges, respectively. The bottom 23 is placed on the insert seat 11 of the shank 10. The bottom 23 of the disposable cutting insert 20 is formed with a positioning recess 24 corresponding in shape to the positioning portion 12 of the insert seat 11, as shown in FIG. 2. According to the preferred embodiment, the positioning recess 24 has a triangular shape. The positioning recess 24 has a first inner side 241, a second inner side 242, and a third inner side 243. A through hole 25 is defined in the positioning recess 24 for the screw 26 to be inserted from the top 22 of the disposable cutting insert 20 and screwed to the insert seat 11.

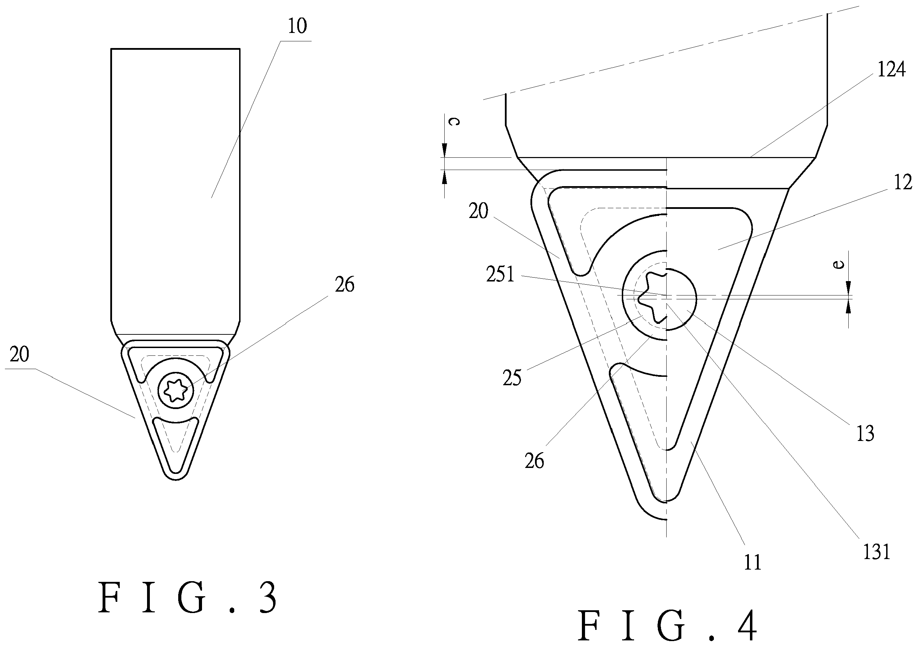

FIG. 4 is a partial sectional view showing the disposable cutting insert 20 mounted to the insert seat 11 of the present invention. A slight offset e is defined between a center point 251 of the through hole 25 of the disposable cutting insert 20 and a center point 131 of the screw hole 13 of the positioning portion 12. The offset e is between 0.1mm and 0.2mm.The center point 131 of the screw hole 13 is slightly higher than the center point 251 of the through hole 25, so that a height difference is defined between the center point 131 of the screw hole 13 and the center point 251 of the through hole 25. The height difference is the offset e. Thus, when the disposable cutting insert 20 is locked to the insert seat 11, the disposable cutting insert 20 will be slightly shifted upward by the push of the screw 26. In addition, the disposable cutting insert 20 is tightened to the positioning portion 12 by the contact between the first inner side 241 and the second inner side 242 that are arranged in a V shape and the first side surface 121 and the second side surface 122 of the positioning portion 12 that are arranged in a V shape, in cooperation with the locking of the screw 26 to provide a tightening effect. Therefore, there is no contact between the third inner side 243 of the disposable cutting insert 20 and the third side surface 123 of the positioning portion 12, and there is a spacing between them. The third side surface 123 only provides a quick positioning effect for the disposable cutting insert 20. Therefore, there is a gap C between the second side 213 of the disposable cutting insert 20 and the first side 124 of the insert seat 11, so that the disposable cutting insert 20 can move a small distance when it is locked, without hindrance.

Referring to FIG. 1, FIG. 2 and FIG. 5, the first inner side 241 and the second inner side 242 of the disposable cutting insert 20 and the first side surface 121 and the second side surface 122 of the positioning portion 12 are gradually and tightly engaged with each other. The first side surface 121, the second side surface 122 and the screw 26 generate concurrent forces, a force F1, a force F2 and a force F3, to be tightly locked by interference fit as a rigid body, and the tightly locked position is near to the tip of the disposable cutting insert 20 (or the insert seat 11). Therefore, the rigidity of the disposable cutting insert 20 is improved, the cutting performance of the disposable cutting insert 20 is improved, the shaking and vibration of the cutting edge is improved, the cutting depth is relatively increased, and the cutting efficiency is improved effectively.

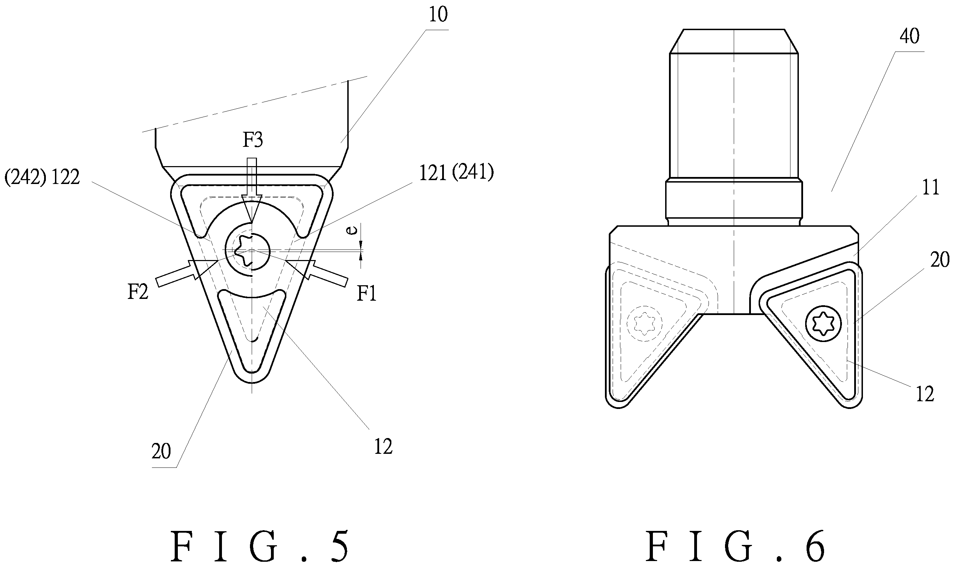

FIG. 6 illustrates an embodiment of the present invention applied to a milling tool 40. As shown in FIG. 1, FIG. 2 and FIG. 4, the first inner side 241 and the second inner side 242 arranged in a V shape are in contact with and the first side surface 121 and the second side surface 122 of the positioning portion 12 arranged in a V shape, in cooperation with the offset e between the through hole 25 and the screw hole 13, so that the disposable cutting insert 20 and the positioning portion 12 are tightly engaged with each other by interference fit as a rigid body, especially at the contact position of the two V-shaped surfaces. There is no gap at the contact position of the V-shaped surfaces of the disposable cutting insert 20 and the positioning portion 12, and the tightly locked position is near the tip of the disposable cutting insert 20 (or the insert seat 11), thus increasing the rigidity of the disposable cutting insert 20. When the milling tool 40 performs milling, the disposable cutting insert 20 does not have alternating deflection, thereby improving the accuracy of cutting dimensions, reducing the roughness of the surface of a workpiece, and prolonging the service life of the cutting insert. The invention is practical and progressive.

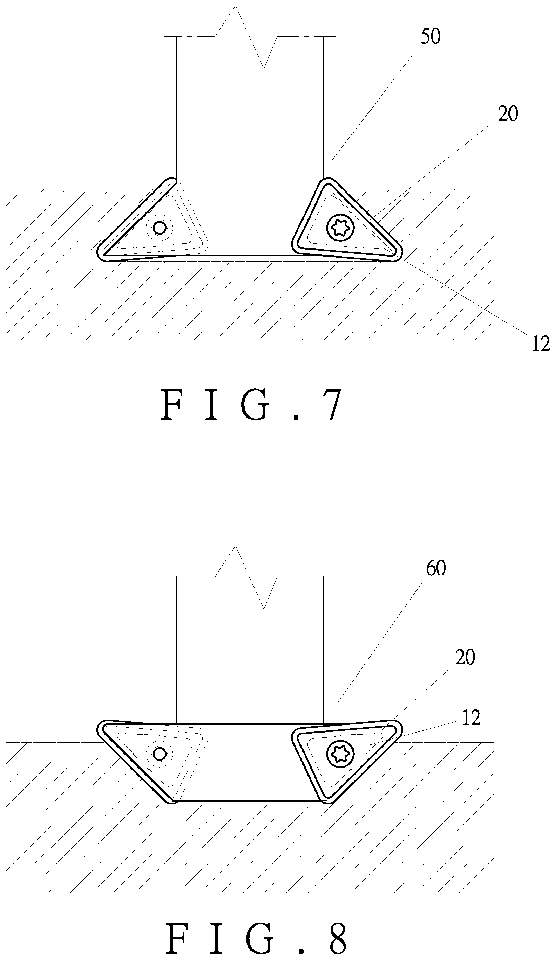

FIG. 7 and FIG 8 illustrate an embodiment of the present invention applied to a dovetail-groove cutting tool 50 and a T-groove cutting tool 60. The dovetail-groove cutting tool 50 and the T-groove cutting tool 60 mainly change the angular position of the disposable cutting insert 20 of the milling tool 40 shown in FIG. 6. Since the assembly rigidity of the disposable cutting insert 20 and the positioning base 12 is good, and there is no gap at the contact position of the V-shaped surfaces of the disposable cutting insert 20 and the positioning portion 12, changing the assembly angle of the disposable cutting insert 20 will not affect its assembly rigidity. It is very suitable for milling grooves of various angles or flat surfaces.

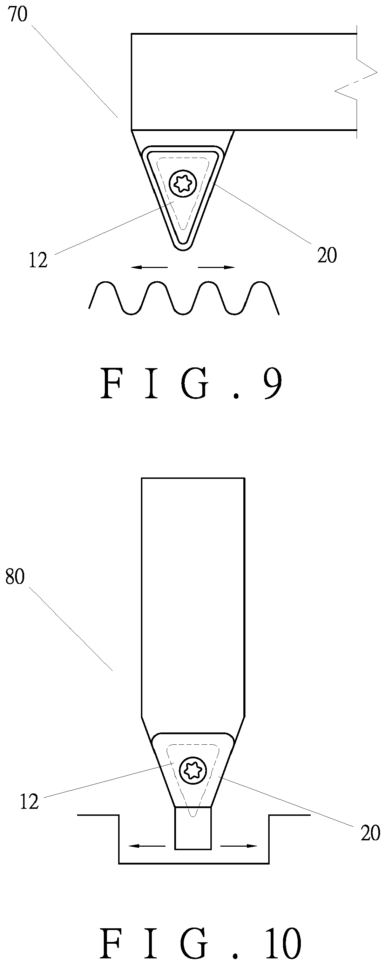

FIG. 9 and FIG. 10 illustrate embodiments of the present invention applied to a round-groove turning tool 70 or a grooving turning tool 80. Both sides of the round-groove turning tool 70 or the grooving turning tool 80 are subjected to a cutting force or an alternate cutting force when turning. In the present invention, there is no gap at the contact position of the V-shaped surfaces of the disposable cutting insert 20 and the positioning portion 12. The disposable cutting insert 20 does not cause deflection or alternate deflection. The disposable cutting insert 20 and the positioning portion 12 are tightly locked to each other at a position very close to the tip. The assembly has good rigidity, reduces vibrations caused by turning, improves the accuracy of the roughness and size of the cutting surface, and is practical and progressive.

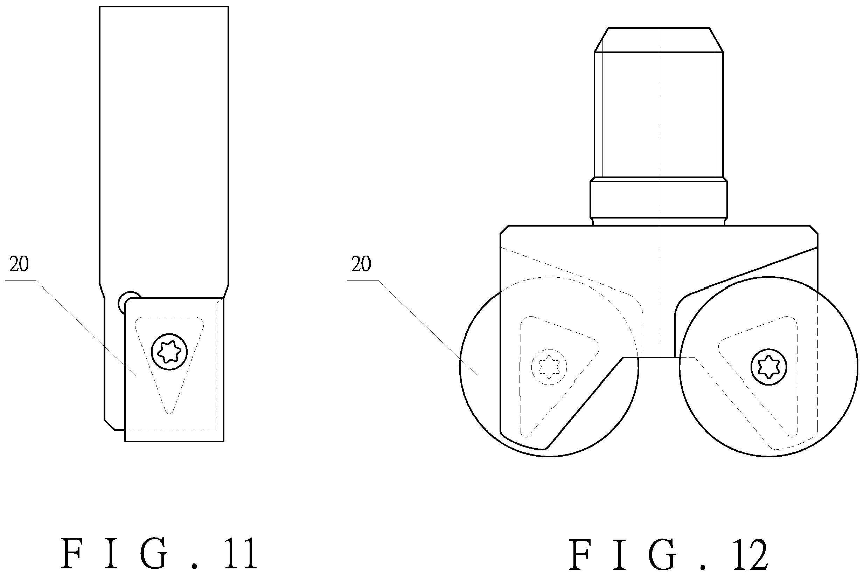

Referring to FIG. 11 and FIG. 12, the structure that the disposable cutting insert 20 and the positioning portion 12 of the present invention are tightly locked to each other can be used for various shapes of disposable cutting inserts, such as a square disposable cutting insert 20, a circular disposable cutting insert 20, or other shapes of disposable cutting inserts 20 designed according to a milling workpiece. The applicability is very wide.

In summary, according to the present invention, through the angular positioning portion disposed on the insert seat at the front end of the shank and the positioning recess disposed at the bottom of the disposable cutting insert and corresponding in shape to the positioning portion of the insert seat, when the screw is locked, in cooperation with the offset e between the through hole and the screw hole, the disposable cutting insert and the positioning portion are tightly engaged with each other by interference fit as a rigid body. There is no gap at the contact position of the V-shaped surfaces of the disposable cutting insert and the positioning portion, and the tightly locked position is near the tip of the disposable cutting insert, thus increasing the rigidity of the disposable cutting insert. When the milling tool performs milling, the disposable cutting insert does not have alternate deflection, thereby improving the accuracy of cutting dimensions, reducing the roughness of the surface of a workpiece, and prolonging the service life of the cutting insert. The invention is practical and progressive.

Although particular embodiments of the present invention have been described in detail for purposes of illustration, various modifications and enhancements may be made without departing from the spirit and scope of the present invention. Accordingly, the present invention is not to be limited except as by the appended claims.

## Claims

1. A disposable cutting insert locking structure, comprising a shank (10) and a disposable cutting insert (20), the disposable cutting insert (20) being locked on an insert seat (11) of the shank (10) by a screw (26); **characterized by**:
the insert seat (11) being disposed at a front end of the shank (10), the insert seat (11) being a concave configuration and having a first side (124), the insert seat (11) having a positioning portion (12), the positioning portion (12) being provided with a screw hole (13), the positioning portion (12) having a first side surface (121) and a second side surface (122), the first side surface (121) and the second side surface (122) being arranged in a V shape, the positioning portion (12) having a triangular shape and further having a third side surface (123), the first side surface (121) and the second side surface (122) being disposed at a front end of the positioning portion (12), the third side surface (123) being disposed at a rear end of the positioning portion (12), the first side surface (121), the second side surface (122) and the third side surface (123) surrounding a solid body of the positioning portion (12), the disposable cutting insert (20) having a bottom (23), the bottom (23) being formed with a positioning recess (24) corresponding in shape to the positioning portion (12) of the insert seat (11), a through hole (25) being defined in the positioning recess (24) for the screw (26) to be inserted from a top (22) of the disposable cutting insert (20) and screwed to the insert seat (11), the positioning recess (24) having a first inner side (241), a second inner side (242) and a third inner side (243), wherein when the disposable cutting insert (20) is locked to the insert seat (11), a gap is defined between a second side (213) of the disposable cutting insert (20) and the first side (124) of the insert seat (11).

2. The disposable cutting insert locking structure as claimed in claim 1, wherein a slight offset (e) is defined between a center point (251) of the through hole (25) of the disposable cutting insert (20) and a center point (131) of the screw hole (13) of the positioning portion (12).

3. The disposable cutting insert locking structure as claimed in claim 2, wherein the offset (e) is between 0.1mm and 0.2mm.

4. The disposable cutting insert locking structure as claimed in claim 3, wherein the center point (131) of the screw hole (13) is slightly higher than the center point (251) of the through hole (25) so that a height difference is defined between the center point (131) of the screw hole (13) and the center point (251) of the through hole (25), and the height difference is the offset (e).

5. The disposable cutting insert locking structure as claimed in claim 1, wherein the disposable cutting insert (20) has a first cutting side (211), a second cutting side (212), the second side (213), the top (22) and the bottom (23), intersecting edges between the top (22) and the first cutting side (211) and between the top (22) and the second cutting side (212) serve as two cutting edges, and the bottom (23) is placed on the insert seat (11) of the shank (10).
